# EUROPÄISCHE PATENTSCHRIFT

(11) **EP 1 218 825 B1**
(45) Veröffentlichungstag und Bekanntmachung des Hinweises auf die Patenterteilung: **04.06.2003**
(21) Anmeldenummer: 00963972.5
(22) Anmeldetag: 06.09.2000
(51) Int. Cl.: G06F 13/368

(54) **VERFAHREN ZUM AUSTAUSCH VON DATEN ZWISCHEN AN EINEN GEMEINSAMEN BUS ANGESCHLOSSENEN MODULEN**
METHOD FOR EXCHANGING DATA BETWEEN MODULES CONNECTED TO A COMMON BUS
PROCEDE POUR ECHANGER DES DONNEES ENTRE DES MODULES RELIES A UN BUS COMMUN

(30) Priorität: 07.09.1999 DE 19942676
(43) Veröffentlichungstag der Anmeldung: 03.07.2002
(73) Patentinhaber: SIEMENS AKTIENGESELLSCHAFT, 80333 München (DE)
(72) Erfinder: HUTNER, Franz, D-85254 Einsbach (DE); PELESKA, Pavel, D-82166 Gräfelfing (DE)
(86) Internationale Anmeldenummer: DE0003086
(87) Internationale Veröffentlichungsnummer: WO01018660

(56) Entgegenhaltungen:
- US-A- 4 161 779
- US-A- 5 051 946
- US-A- 5 901 297

## Beschreibung

Die vorliegende Erfindung betrifft ein Verfahren zum Austausch von Daten zwischen an einen gemeinsamen Bus angeschlossenen Modulen sowie eine Vorrichtung zur Durchführung dieses Verfahrens.

Üblicherweise enthalten Computer eine Reihe von Hardware-Modulen, die an einen gemeinsamen Bus, beispielsweise an einen ISA-Bus oder an einen PCI-Bus angeschlossen sind. Dabei sind mehrere dieser Hardware-Module - in der Regel Busmaster genannt - berechtigt, Signale auf die Busleitungen zu geben, die dann von den anderen Bus-Teilnehmern, z.B. Slaves empfangen werden können. Dabei muß sichergestellt werden, daß nicht zwei Busmaster gleichzeitig Signale auf die Busleitungen geben. Aus diesem Grund weisen die Bussysteme üblicherweise ein zentrales Verwaltungs-Modul (Arbiter) auf, welches zu bestimmten Zeitpunkten den einzelnen Busmastern den Bus für die Datenübertragung zuteilt.

Möchte ein Busmaster für einen bestimmten Zeitraum den Bus benutzen, übermittelt er dem Arbiter eine entsprechende Busanforderungs-Information über eine Anforderungs- oder Requestleitung, welche den Busmaster mit dem zentralen Arbiter verbindet. Dabei muß zwischen jedem einzelnen Busmaster und dem Arbiter eine Requestleitung vorgesehen sein. Der Arbiter selbst weist beispielsweise einen Speicher auf, in dem die von den verschiedenen Busmastern ankommenden Busanforderungen abgelegt werden, und teilt dann nach einem vorgegebenen Entscheidungsmuster einem der Busmaster den Bus für einen oder mehrere Takte zu. Die Zuteilung erfolgt dabei durch die Übertragung eines speziellen Grantsignals über eine Zuteilungs- oder Grantleitung, wobei wiederum zwischen jedem einzelnen Busmaster und dem Arbiter eine solche Grantleitung existieren muß.

Da von den einzelnen Busmastern jeweils nur dann Daten auf den Bus abgegeben werden, wenn ihnen von dem zentralen Arbiter dazu die Erlaubnis erteilt worden ist, ist sichergestellt, daß niemals zwei Busmaster gleichzeitig den Bus betreiben, d.h. ein Signal auf die Busleitungen geben.

Handelt es sich um ein sehr großes und weit verzweigtes Bussystem mit sehr vielen Busteilnehmern, so muß bei der eben beschriebenen Lösung oftmals eine relativ lange Laufzeit der Anforderungs- und Zuteilungsinformationen berücksichtigt werden. Dies bedeutet jedoch, daß der Bus insgesamt nur mit einer relativ niedrigen Taktrate und somit nur langsam arbeiten kann. Ein weiteres Problem besteht auch darin, daß die Busmaster zwar jederzeit ihre Busanforderungs-Informationen an den Arbiter senden können, dann jedoch eine Zeitlang warten müssen, bis sie tatsächlich den Bus benutzen dürfen. Da sie selbst allerdings nicht den genauen Zeitpunkt der Buszuteilung kennen, bleibt die Zeit zwischen Absenden der Busanforderungs-Information und Empfang des Zuteilungsinformation ungenützt. Dies hat zur Folge, daß die einzelnen Busteilnehmer ihre Redhenleistung nicht optimal ausnutzen können.

Ein Bussystem, das einen Datenaustausch ohne Arbiter ermöglicht, ist aus US 5051946 bekannt. Die dort verwendeten Module speichern aber nicht den Takt der Abgabe der Busanforderung.

Es ist daher Aufgabe der vorliegenden Erfindung, ein Verfahren und ein System zum Austausch von Daten zwischen an einem gemeinsamen Bus angeschlossenen Modulen anzugeben, bei denen die Busleitungen sowie die Rechenkapazitäten der einzelnen Module möglichst effektiv genützt werden können.

Die Aufgabe wird durch ein Verfahren, welches die Merkmale des Anspruchs 1 aufweist, bzw. durch ein System gemäß Anspruch 7 gelöst. Erfindungsgemäß erfolgt nunmehr die Verwaltung des Bussystems nicht mehr durch ein einziges zentrales Verwaltungsmodul, sondern durch alle in dem System zusammengeschlossenen Module, wobei jedes Modul unabhängig von den anderen Busteilnehmern entscheidet, ob es während eines bestimmten Bus-Taktes Daten auf die Busleitungen gibt oder nicht. Somit weist jedes Modul seinen persönlichen Arbiter auf. Um auch bei diesem Verfahren sicherzustellen, daß während eines bestimmten Taktes der Bus nicht von zwei Teilnehmern gleichzeitig betrieben wird, gibt ein Modul, welches den Bus betreiben möchte, zunächst eine Busanforderungs-Information ab, welche von allen anderen Modulen empfangen wird. Der Zeitpunkt der Anforderung - also der Takt - sowie die Herkunft der Busanforderungs-Information - beispielsweise eine Nummer oder Adresse des Moduls - werden in einem in allen Modulen vorhandenen Anforderungsspeicher (auch in dem Anforderungsspeicher desjenigen Moduls, welches die Busanforderungs-Information selbst abgegeben hat) gespeichert, so daß in sämtlichen Modulen die gleichen Busanforderungs-Informationen vorliegen. Aufgrund dieser Busanforderungs-Informationen wird dann jeweils einzeln von den Modulen entschieden, ob sie in einem bestimmten Takt den Bus benutzen, wobei die Entscheidung nach einem vorgegebenen und für alle Module identischen Entscheidungsmuster erfolgt.

Da jeder Busteilnehmer unmittelbar selbst entscheidet, ob er den Bus benutzt oder nicht, entfällt bei diesem Verfahren die Laufzeit des Zuteilungs- bzw. Grantsignals, wodurch der Bus insgesamt schneller arbeiten kann. Da nun in allen Busteilnehmern identische Busarbiter vorliegen, d.h. Arbiter, welche die Busanforderungs-Informationen in gleicher Weise speichern und nach dem identischen Entscheidungsmuster eine Entscheidung über die Busbelegung treffen, ist jedem Busteilnehmer der laufende Belegungszustand sowie der Folgebelegungszustand des Busses bekannt. Ein einzelnes Modul, das beispielsweise weiß, daß es erst in einigen Takten den Bus betreiben darf, kann die dazwischen liegend Zeit für anderweitige Aufgaben nützen, so daß bei dem erfindungsgemäßen Verfahren eine effektivere Auslastung der einzelnen Busteilnehmer erzielt werden kann. Damit die verteilten Arbiter vom gleichen Grundzustand ausgehend arbeiten können, werden sie zu Beginn mittels einem synchronen Resetsignals synchronisiert.

Weiterbildungen der Erfindung sind Gegenstand der Unteransprüche. Vorzugsweise erfolgt die Entscheidung über eine Belegung des Busses gemäß dem Entscheidungsmuster derart, daß der Bus von den Modulen in der zeitlichen Reihenfolge betrieben wird, in der die Busanforderungs-Informationen abgegeben wurden. Dabei ist der in sämtlichen Busteilnehmern vorhandene Anforderungsspeicher vorzugsweise als FIFO (First in, First out) ausgebildet. Üblicherweise ist jedoch bei Bussystemen die kleinste Zeiteinheit, die noch unterschieden werden kann, ein einzelner Takt. Es ist daher nicht auszuschließen, daß mehrere Module gleichzeitig in einem Takt eine Busanforderungs-Information abgeben. Es kann dann vorgesehen sein, daß die Reihenfolge der Busbelegung durch mehrere in einem einzigen Takt abgegebene Busanforderungs-Informationen nach einer speziellen vorgegebenen Reihenfolge erfolgt.

Die kleinste noch unterscheidbare Zeiteinheit in dem Bussystem ist wie zuvor erwähnt ein einzelner Takt. Es kann daher der Fall auftreten, daß in einem Takt mehrere Module (im Extremfall alle Module) eine Anforderung stellen, wobei allerdings je Takt jeweils nur ein Modul die eigentlichen Busleitungen, die zur Übertragung von Signalen verwendet werden, belegen kann. Falls also beispielsweise in einem System, in dem ein Bustransfer den Bus nur für einen Takt belegt, gleichzeitig alle n Busteilnehmer den Bus anfordern, dauert die gesamte Abarbeitung bzw. Belegung des Busses aufgrund dieser n Anforderungen n Takte, während die Anforderungen selbst nur in einem einzigen Takt abgegeben wurden. Dies bedeutet wiederum, daß während die n Anforderungen abgearbeitet werden, von den Busteilnehmern weiter neue Anforderungen gestellt werden können, so daß die Anforderungsspeicher mit der Zeit vollkommen belegt werden können. Um zu verhindern, daß Anforderungen gestellt werden, welche nicht mehr gespeichert und somit auch nicht mehr bearbeitet werden können, muß dafür Sorge getragen werden, daß jedes Modul "weiß", wenn die Speicherressourcen für neue Anforderungen erschöpft sind. Da die dezentralen Arbiter in jedem Modul identisch aufgebaut sind und somit die Auslastung der Speicherressourcen überall gleich ist, kann jedes einzelne Modul diese Information von seinem persönlichen Arbiter erhalten oder ableiten, so daß festgelegt werden kann, daß die Module solange keine weiteren Anforderungen mehr auf ihre Requestleitungen geben, bis wieder Speicherkapazitäten im eigenen Arbiter frei sind.

Ferner ist es denkbar, daß einige der Busteilnehmer wichtigere Aufgaben für das gesamte System erfüllen, so daß deren Busanforderungen bevorzugt behandelt werden sollten. Um dies ebenfalls berücksichtigen zu können kann vorgesehen sein, daß neben dem ursprünglichen Anforderungsspeicher jeder Busteilnehmer einen weiteren Anforderungsspeicher für Anforderungen einer höheren Prioritätsstufe aufweist, in dem die Anforderungen dieser speziellen Busteilnehmer getrennt abgelegt werden. Gemäß dem Entscheidungsmuster kann dann vorgesehen sein, daß der Bus entsprechend einer vorgegebenen Sequenz für Anforderungen aus dem normalen Anforderungsspeicher bzw. für Anforderungen der höheren Prioritätsstufe verwendet wird. Das Auffüllen dieses zweiten Anforderungsspeichers sowie die zeitliche Reihenfolge der Busbelegung durch die priorisierten Anforderungen erfolgt unabhängig von der Bearbeitung der regulären Bus-anforderungen. Sollen noch weitere unterschiedliche Prioritätsstufen berücksichtigt werden, so sind dementsprechend viele Anforderungsspeicher erforderlich und der Arbitrierungsalgorithmus, also die Reihenfolge in der der Bus durch Anforderungen aus den verschiedenen Speichern belegt wird, ist entsprechend anzupassen.

Gemäß einem weiteren Aspekt der Erfindung wird ein Bussystem zum Austausch von Signalen zwischen mehreren Modulen angegeben, wobei von jedem Modul eine Anforderungsleitung abgeht, die zu sämtlichen anderen Modulen verzweigt, und wobei jedes Modul zumindest einen Anforderungsspeicher aufweist, in dem der Zeitpunkt einer Busanforderungs-Information und deren Herkunft gespeichert werden, sowie eine Busbelegungssschaltung, die anhand der gespeicherten Busanforderungs-Informationen nach einem vorgegebenen und für alle Module identischen Entscheidungsmuster eine Belegung des Busses durch das Modul in einem bestimmten Takt ermöglicht oder nicht.

Unter dem Begriff Modul wird dabei jeder einzelne Bus-Teilnehmer bezeichnet, wobei es sich dabei beispielsweise um zusammengefaßte Baugruppen oder auch um einzelne IC-Chips handeln kann.

Im folgenden wird die Erfindung anhand der beiliegenden Zeichnung näher erläutert. Es zeigen:
Figur 1 eine Darstellung der erfindungsgemäßen Verknüpfung von vier Busteilnehmern; und
Figur 2 eine schematische Darstellung des Speicherns und Bearbeitens von Busanforderungs-Informationen.

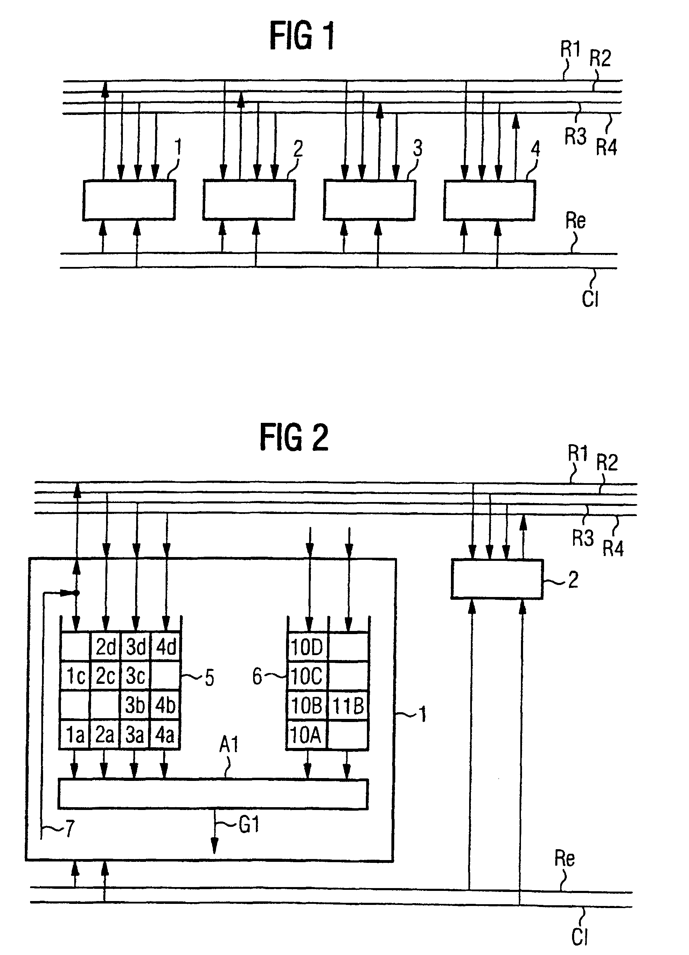

In Figur 1 ist die Verbindung von vier Modulen 1-4 in einem erfindungsgemäßen Bussystem dargestellt. Nicht gezeigt werden dabei die für den eigentlichen Datentransfer verwendeten Busleitungen. Von jedem Modul 1-4 geht jeweils eine Anforderungsleitung (Requestleitung) R1-R4 ab, die zu allen anderen Modulen verzweigt, so daß eine Busanforderungs-Information allen Modulen mitgeteilt werden kann. Um ein zeitlich synchrones Verhalten aller Module 1-4 zu ermöglichen, werden diese durch eine gemeinsame Zeitgeberleitung Cl synchronisiert. Ferner kann den Modulen 1-4 zu Beginn über eine Resetleitung Re ein Rücksetzsignal übermittelt werden, daß alle Busteilnehmer, genaugenommen jeweils die Arbiter - also die Busbelegungssschaltungen - und den Inhalt der Anforderungsspeicher in einen gemeinsamen Ausgangszustand versetzt. Erfindungsgemäß stellt ein beliebiges Modul 1-4 eine Busanforderung für die Belegung des Busses für die Dauer eines Transfers, indem es für einen Takt seine jeweilige Requestleitung R1-R4 aktiviert. Möchte das Modul den Bus für zwei Transfers anfordern, so wird die entsprechende Requestleitung R1-R4 für zwei Takte aktiviert.

Das Auffüllen des Anforderungsspeichers sowie die Bearbeitung der verschiedenen Anforderungen soll nun anhand Figur 2 erläutert werden. In Figur 2 ist das erste Modul 1 vergrößert dargestellt. Der für die Belegung der Busleitungen verantwortliche Arbiter A1 (die Busbelegungsschaltung) ist nun fest in das Modul 1 integriert. Ferner ist diesem Arbiter A1 zunächst ein erster Anforderungsspeicher 5, der vorzugsweise als FIFO ausgelegt ist, zugeordnet.

Im vorliegenden Beispiel sei zunächst angenommen, daß insgesamt vier Module als gleichberechtigte Busteilnehmer vorhanden sind. Das Modul 1 stellt eine Busbelegungsanforderung, indem es seine interne Requestleitung 7 aktiviert. Diese interne Requestleitung 7 führt zum einen direkt zu dem Anforderungsspeicher 5 und zum anderen zu der externen Requestleitung R1, die wiederum zu allen anderen Modulen - wie hier gezeigt zum zweiten Modul 2 - verzweigt.

Da die Laufzeiten der Busanforderungs-Informationen je nach Länge der Requestleitungen R1-R4 leicht variieren können, wird nur die Information, in welchem Takt eine Anforderung gestellt wurde, in dem Anforderungsspeicher 5 gespeichert, nicht aber der exakte Zeitpunkt. Innerhalb eines Taktes kann maximal von jedem Modul 1-4 eine Anforderungen gestellt werden. Dies wird dadurch berücksichtigt, daß alle innerhalb eines Takts gestellten Anforderungen in einem Speicherblock, der in der Darstellung des Anforderungsspeichers 5 einer Zeile entspricht, abgelegt werden. Da bei vier Modulen maximal vier Anforderungen je Takt gestellt werden können, weist ein Block somit vier Zellen auf. Im vorliegenden Beispiel hat der Anforderungsspeicher 5 ferner eine Speichertiefe von vier.

Entsprechend der Darstellung haben zum Zeitpunkt a (genau genommen während eines Taktes a) sämtliche Module 1-4 Anforderungen gestellt (la, 2a, 3a, 4a) die alle in den vier Zellen des ersten Speicherblocks abgelegt wurden. Es wird nun festgelegt, daß alle Anforderungen, die innerhalb eines gemeinsamen Speicherblocks abgelegt werden, in einer festen Reihenfolge bearbeitet werden. Beispielsweise wird also der Bus in den darauffolgenden vier Takten nacheinander von den Modulen 1, 2, 3 und schließlich 4 belegt.

Während der Bearbeitung der Anforderung 1a wurden jedoch von den Modulen 3 und 4 im darauffolgenden Takt b weitere Busbelegungsanforderungen (3b, 4b) gestellt, die in dem nächsten Speicherblock abgelegt wurden. Da in diesem Takt die beiden ersten Module 1 und 2 keine Anforderungen stellten, bleiben die entsprechenden Zellen dieses zweiten Blocks frei.

Im darauffolgenden Takt, in dem die Anforderung 2a bearbeitet wurde, stellten schließlich die Module 1 bis 3 die Anforderungen 1c, 2c und 3c, und im darauffolgenden Takt (Bearbeitung der Anforderung 3a) die Module 2 bis 4 die Anforderungen 2d, 3d und 4d. Da der Anforderungsspeicher 5 in der Darstellung lediglich eine Speichertiefe von vier Blöcken hat, ist nun jeder Speicherblock durch zumindest eine noch nicht bearbeitete Anforderung belegt, da zunächst noch die Anforderung 4a bedient werden muß, um den ersten Block vollständig zu leeren. Dabei ist die Belegung des Anforderungsspeichers 5 in allen Arbitern der vier Module 1 bis 4 identisch. Dieser Belegungszustand wird den Modulen von ihren jeweiligen Arbitern mitgeteilt, so daß zunächst keine weiteren Busanforderungen gestellt werden. Erst wenn auch die Anforderung 4a bearbeitet wurde, wodurch der unterste Speicherblock wieder frei wird, können neue Anforderungen gestellt werden. Es führen somit alle Anforderungen in der gleichen Reihenfolge zur Belegung des Busses wie diese zeitlich gestellt wurden. Es ist anzumerken, daß die Zeitpunkte a, b, c und d nicht notwendigerweise aufeinanderfolgende Takte sein müssen, da ein Speicherblock nur dann gefüllt wird, wenn in einem Takt mindestens eine Anforderung gestellt wurde.

Entscheidet der Arbiter A1, daß entsprechend den in dem Anforderungsspeicher 5 gespeicherten Anforderungen das Modul 1 den Bus belegen kann, teilt er es dem Modul 1 über eine interne Grantleitung G1 mit.

In einem komplexeren Bussystem erfüllen üblicherweise einige der Busteilnehmer wichtigere Aufgaben als andere. Um die Anforderungen dieser Module, bei denen es sich beispielsweise um eine Busbrücke handeln könnte, bevorzugt zu berücksichtigen, wird den Arbitern, wie in Figur 2 dargestellt, ein weiterer Anforderungsspeicher 6 zugeordnet, der lediglich priorisierte Anforderungen von den neu hinzugekommenen priorisierten Modulen 10 und 11 speichert. Dieser zusätzliche Anforderungsspeicher 6 arbeitet nach dem gleichen Prinzip wie der oben beschriebene ursprüngliche Anforderungsspeicher, d.h. das Auffüllen der Speicherblöcke erfolgt in gleicher Weise wie bei dem herkömmlichen Anforderungsspeicher 5. Allerdings kann nun festgelegt sein, daß die Bedienung der in diesem zusätzlichen Speicher 6 abgelegten Anforderungen durch die Arbiter A1 mit Vorrang erfolgt. In diesem Fall kann beispielsweise ein Arbitrierungsalgorithmus implementiert werden, der zunächst eine Anforderung der nicht priorisierten Module 1 bis 4 und anschließend zwei Anforderungen der priorisierten Module 10 und 11 bedient. Bei der in Figur 2 gezeigten Belegung der beiden Anforderungsspeicher 5 und 6 würde dies zur Gewährung der Anforderungen in folgender Reihenfolge führen: 1a, 10A, 10B, 2a, 11B, 10C, 3a, 10D, 4a, 3b, 4b, usw.

Auch die priorisierten Module 10 und 11 dürfen solange Anforderungen stellen, bis dieser zusätzliche Belegungsspeicher 6 für priorisierte Anforderungen voll ist, ungeachtet des Grades der Belegung des ursprünglichen Anforderungsspeichers 5. Die Anforderungszeitpunkte in Klein- und Großbuchstaben sind dabei nicht miteinander korreliert.

Sollen schließlich noch weitere Prioritätsstufen für die Busgewährung berücksichtigt werden, so sind den Arbitern entsprechend viele Anforderungsspeicher zuzuordnen und der oben beispielhaft beschriebene Arbitrierungsalgorithmus ist entsprechend auszulegen.

Da entsprechend dem fest vorgegebenen Entscheidungsmuster zur Belegung der Busleitungen jedes Modul selbst weiß, wann es zum nächsten Mal den Bus belegen kann, kann es sich auf die Busbelegung vorbereiten, d.h. möglicherweise in dem dazwischenliegenden Zeitraum andere Berechnungen durchführen. Ferner kann jedes Modul bei geeigneter Ausführung so viele Anforderungen stellen, daß seine Busbelegung optimiert wird. Da ferner auch die langen Laufzeiten der Grantsignale, die bei einem zentralen Arbiter auftreten, entfallen, kann der Bus mit einer höheren Taktrate betrieben werden. Das erfindungsgemäße Verfahren bietet somit die Möglichkeit, die Bus- und Rechenkapazitäten des Systems wesentlich effektiver auszunützen als dies bisher der Fall war.

## Patentansprüche

1. Verfahren zum Austausch von Daten zwischen an einen gemeinsamen Bus angeschlossenen Modulen (1-4) mit folgenden Schritten:
alle Module (1-4) werden zeitlich synchronisiert;
ein Modul (1-4), welches den Bus betreiben möchte, gibt eine Busanforderungs-Information ab, welche von den anderen Modulen (1-4) empfangen wird;
in allen Modulen (1-4) werden in einem Anforderungsspeicher (5) die Herkunft der Busanforderungs-Information gespeichert;
jedes Modul (1-4) entscheidet anhand der gespeicherten Busanforderungs-Informationen (1a 2a, 10A, 10B) unabhängig von den anderen Modulen (1-4), ob es in einem bestimmten Takt ein Signal auf den Bus gibt, wobei die Entscheidung nach einem vorgegebenen und für alle Module (1-4) identischen Entscheidungsmuster erfolgt **dadurch gekennzeichnet, daß** in dem Anforderungspeicher Zusätzlich der Takt der Abgabe gespeichert wird.

2. Verfahren nach Anspruch 1,
**dadurch gekennzeichnet,**
**daß** zu Beginn des Verfahrens alle Anforderungsspeicher (5) durch ein Rücksetzsignal in einen identischen Ausgangszustand versetzt werden.

3. Verfahren nach Anspruch 1 oder 2,
**dadurch gekennzeichnet,**
**daß** gemäß dem Entscheidungsmuster der Bus in der zeitlichen Reihenfolge durch die Module (1-4) betrieben wird, in der die entsprechenden Busanforderungs-Informationen abgegeben wurden.

4. Verfahren nach Anspruch 3,
**dadurch gekennzeichnet,**
**daß** für den Fall, daß in einem Takt von mehreren Modulen (1-4) gleichzeitig Busanforderungs-Informationen abgegeben werden, die entsprechenden Informationen in einem gemeinsamen Speicherblock des Anforderungsspeichers (5) gespeichert werden, wobei gemäß dem Entscheidungsmuster die Belegung des Busses aufgrund von in einem Speicherblock gespeicherten Informationen (1a, 2a ,3a ,4a) nach einer vorgegebenen Reihenfolge erfolgt.

5. Verfahren nach Anspruch 4,
**dadurch gekennzeichnet,**
**daß** von den Modulen (1-4) keine weiteren Busanforderungs-Informationen abgegeben werden, falls die Anzahl der zumindest teilweise belegten Speicherblöcke einen vorgegebenen Grenzwert erreicht hat.

6. Verfahren nach einem der vorherigen Ansprüche,
**dadurch gekennzeichnet,**
**daß** von einigen Modulen Busanforderungs-Informationen einer höheren Prioritätsstufe abgegeben werden können, wobei
die entsprechenden Informationen (10A, 10B) in einem weiteren Speicher (6) gespeichert werden,
der Bus nach einem vorgegebenen Belegungsalgorithmus für Busanforderungs-Informationen in dem ersten Belegungsspeicher (5) oder für Busanforderungs-Informationen der höheren Prioritätsstufe in dem weiteren Speicher (6) verwendet wird, und
die Belegung des Busses entsprechend den Busanforderungs-Informationen der höheren Prioritätsstufe unabhängig von der Belegung entsprechend den normalen Busanforderungs-Informationen erfolgt.

7. System zum Austausch von Daten zwischen an einen gemeinsamen Bus angeschlossenen Modulen (1-4), aufweisend:
Anforderungsleitungen (R1-R4), welche jeweils ein Modul (1-4) mit den anderen Modulen (1-4) verbinden, zum Übermitteln von Busanforderungs-Informationen;
einen Anforderungsspeicher (5) in jedem der Module (1-4) zum Speichern der Herkunft der Busanforderungs-Information;
eine Busbelegungssschaltung (A1) in jedem der Module (1-4) zum Steuern der Busbelegung durch das entsprechende Modul (1-4) anhand der in dem Anforderungsspeicher (5) gespeicherten Busanforderungs-Informationen (1a, 2a, 10A, 10B) entsprechend einem für alle Module (1-4) vorgegebenen und identischen Entscheidungsmuster; und
eine mit allen Modulen (1-4) verbundene Zeitgeberleitung (Cl) zum Synchronisieren der Module (1-4) **dadurch gekennzeichnet, daß** der Anforderungspeicher zusätzlich zum Speichern des Taktes der Abgabe dient.

8. System nach Anspruch 7,
**dadurch gekennzeichnet,**
**daß** das System ferner eine Leitung (Re) zum Übermitteln eines Rücksetzsignals aufweist, durch welches alle Anforderungsspeicher (5) in einen einheitlichen Ausgangszustand versetzt werden.

9. System nach Anspruch 7 oder 8,
**dadurch gekennzeichnet,**
**daß** jedes Modul (1-4) einen weiteren Speicher (6) für Busanforderungs-Informationen höherer Priorität, die von einigen Modulen abgegeben werden, aufweist, wobei die Busbelegungssschaltungen (A1 die in diesem weiteren Speicher (6) gespeicherten Busanforderungs-Informationen höherer Priorität nach einem vorgegebenen Belegungsalgorithmus berücksichtigen.

## Claims

1. Method for interchanging data between modules (1-4) connected to a common bus, having the following steps:
all the modules (1-4) are synchronized in time;
a module (1-4) wishing to operate the bus outputs bus request information which is received by the other modules (1-4);
all the modules (1-4) store the origin of the bus request information in a request memory (5);
each module (1-4) uses the stored bus request information (1a, 2a, 10A, 10B) to decide, independently of the other modules (1-4), whether there is a signal on the bus in a particular clock cycle, the decision being made on the basis of a prescribed decision pattern which is identical for all the modules (1-4),
**characterized in that** the clock cycle of the output is additionally stored in the request memory.

2. Method according to Claim 1,
**characterized**
**in that**, at the start of the method, all the request memories (5) are put into an identical initial state by a reset signal.

3. Method according to Claim 1 or 2,
**characterized**
**in that**, on the basis of the decision pattern, the bus is operated by the modules (1-4) in the order in time in which the corresponding bus request information was output.

4. Method according to Claim 3,
**characterized**
**in that**, if a plurality of modules (1-4) output bus request information at the same time in a clock cycle, the corresponding information is stored in a shared memory block in the request memory (5), and, in accordance with the decision pattern, the bus is used in a prescribed order on the basis of information (1a, 2a, 3a, 4a) stored in a memory block.

5. Method according to Claim 4,
**characterized**
**in that** the modules (1-4) output no further bus request information if the number of the at least partly used memory blocks has reached a prescribed limit value.

6. Method according to one of the preceding claims,
**characterized**
**in that** some modules can output bus request information having a higher priority level, where
the appropriate information (10A, 10B) is stored in a further memory (6),
the bus is used on the basis of a prescribed use algorithm for bus request information in the first use memory (5) or for bus request information having the higher priority level in the further memory (6), and
the bus is used on the basis of the bus request information having the higher priority level irrespective of use on the basis of the normal bus request information.

7. System for interchanging data between modules (1-4) connected to a common bus, having:
request lines (R1-R4), which respectively connect one module (1-4) to the other modules (1-4), for transmitting bus request information;
a request memory (5) in each of the modules (1-4) for storing the origin of the bus request information;
a bus use circuit (A1) in each of the modules (1-4) for controlling bus use by the appropriate module (1-4) on the basis of the bus request information (1a, 2a, 10A, 10B) stored in the request memory (5) in line with a decision pattern which is prescribed and identical for all the modules (1-4); and
a timer line (C1), connected to all the modules (1-4), for synchronizing the modules (1-4), **characterized in that** the request memory is additionally used for storing the clock cycle of the output.

8. System according to Claim 7,
**characterized**
**in that** the system also has a line (Re) for transmitting a reset signal which puts all the request memories (5) into a standard initial state.

9. System according to Claim 7 or 8,
**characterized**
**in that** each module (1-4) has a further memory (6) for higher priority bus request information which is output by some modules, where the bus use circuits (A1) take into account the higher priority bus request information stored in this further memory (6) on the basis of a prescribed use algorithm.

## Revendications

1. Procédé pour échanger des données entre des modules (1-4) reliés à un bus commun, comprenant les étapes suivantes:
tous les modules (1-4) sont synchronisés dans le temps ;
un module (1-4) qui veut exploiter le bus délivre une information de demande de bus qui est reçue par les autres modules (1-4) ;
dans tous les modules (1-4), la provenance de l'information de demande de bus est mémorisée dans une mémoire de demandes (5) ;
chaque module (1-4) décide, sur la base des informations de demande de bus (1a, 2a, 10A, 10B) mémorisées, et indépendamment des autres modules (1-4), s'il émet un signal sur le bus dans un cycle déterminé, la décision intervenant suivant un modèle de décision prédéfini et identique pour tous les modules (1-4),
**caractérisé en ce que** le cycle de l'émission est mémorisé, en plus, dans la mémoire de demandes.

2. Procédé selon la revendication 1, **caractérisé en ce que** toutes les mémoires de demandes (5) sont mises dans un état de départ identique, au début du procédé, grâce à un signal de remise à zéro.

3. Procédé selon la revendication 1 ou 2, **caractérisé en ce que** le bus est exploité par les modules (1-4) dans l'ordre chronologique dans lequel les informations de demande de bus correspondantes ont été délivrées, conformément au modèle de décision.

4. Procédé selon la revendication 3, **caractérisé en ce que**, dans le cas où des informations de demande de bus ont été délivrées simultanément par plusieurs modules (1-4) au cours d'un cycle, les informations correspondantes sont mémorisées dans un bloc de mémoire commun de la mémoire de demandes (5), l'occupation du bus se faisant suivant un ordre prédéfini, conformément au modèle de décision, sur la base des informations (1a, 2a, 3a, 4a) mémorisées dans un bloc de mémoire.

5. Procédé selon la revendication 4, **caractérisé en ce qu'**aucune information de demande de bus supplémentaire n'est délivrée par les modules (1-4) dans le cas où le nombre des blocs de mémoire au moins partiellement occupés a atteint une valeur limite prédéfinie.

6. Procédé selon l'une des revendications précédentes, **caractérisé en ce que** quelques uns des modules peuvent délivrer des informations de demande de bus présentant un degré de priorité supérieur,
les informations correspondantes (10A, 10B) étant mémorisées dans une mémoire supplémentaire (6),
le bus étant utilisé, selon un algorithme d'occupation prédéfini, pour les informations de demande de bus se trouvant dans la première mémoire d'occupation (5) ou pour les informations de demande de bus présentant le degré de priorité supérieur et se trouvant dans la mémoire supplémentaire (6), et
l'occupation du bus en fonction des informations de demande de bus qui présentent le degré de priorité supérieur se faisant indépendamment de l'occupation en fonction des informations de demande de bus normales.

7. Système pour échanger des données entre des modules (1-4) reliés à un bus commun, comprenant:
des lignes de demande (R1-R4) qui relient à chaque fois un module (1-4) aux autres modules (1-4) et servent à la transmission d'informations de demande de bus;
une mémoire de demandes (5) dans chacun dés modules (1-4) pour mémoriser la provenance de l'information de demande de bus ;
un circuit d'occupation de bus (A1) dans chacun des modules (1-4) pour commander l'occupation du bus par le module correspondant (1-4) sur la base des informations de demande de bus (1a, 2a, 10A, 10B) mémorisées dans la mémoire de demandes (5) suivant un modèle de décision prédéfini et identique pour tous les modules (1-4) ; et
une ligne d'horloge (C1) reliée à tous les modules (1-4) pour la synchronisation des modules (1-4),
**caractérisé en ce que** la mémoire de demandes sert, en plus, à mémoriser le cycle de l'émission.

8. Système selon la revendication 7, **caractérisé en ce que** le système comprend, en outre, une ligne (Re) pour la transmission d'un signal de remise à zéro grâce auquel toutes les mémoires de demandes (5) sont mises dans un état de départ homogène.

9. Système selon la revendication 7 ou 8, **caractérisé en ce que** chaque module (1-4) est pourvu d'une mémoire supplémentaire (6) pour les informations de demande de bus de priorité supérieure qui sont délivrées par quelques modules, les circuits d'occupation de bus (A1) prenant en compte les informations de demande de bus de priorité supérieure qui sont mémorisées dans cette mémoire supplémentaire (6) suivant un algorithme d'occupation prédéfini.
